# EUROPÄISCHE PATENTANMELDUNG

(11) **EP 4 450 911 A1**
(43) Veröffentlichungstag der Anmeldung: **23.10.2024**
(21) Anmeldenummer: 24164385.7
(22) Anmeldetag: 19.03.2024
(51) Int. Cl.: F27B 1/00, C04B 2/12, C04B 7/43, F27B 7/20, F27B 15/14

(54) **VORRICHTUNG UND VERFAHREN ZUM BRENNEN VON KALKSTEIN**

(30) Priorität: 31.03.2023 DE 102023202994
(71) Anmelder: Kalkwerke H. Oetelshofen GmbH & Co. KG, 42327 Wuppertal (DE)
(72) Erfinder: ISEKE, Moritz, 42327 Wuppertal (DE)
(74) Vertreter: Gille Hrabal Partnerschaftsgesellschaft mbB Patentanwälte

(57) **Zusammenfassung**

Die Erfindung betrifft eine Vorrichtung und ein Verfahren zum Brennen von Kalkstein sowie eine Verwendung einer Brennzone zum Brennen von vorgewärmtem Kalkstein zwecks Herstellung von Branntkalk. Eine Vorrichtung (1) zum Brennen von Kalkstein (2) umfasst eine Vorwärmzone (10) zum Vorwärmen von Kalkstein (2), eine Brennzone (20) zum Brennen des vorgewärmten Kalksteins (2) zwecks Herstellung von Branntkalk (3) und eine Kühlzone (30) zum Abkühlen des Branntkalks (3). Die Vorrichtung (1) weist eine Zuführung (15) für Kalkstein (2) und eine Abführung (25) für Branntkalk (3) auf. Die Zuführung (15) und/oder die Abführung (25) ist gastechnisch im Wesentlichen abgeschlossen. So kann hochreines CO₂ effizient separiert werden.

## Beschreibung

Die Erfindung betrifft eine Vorrichtung und ein Verfahren zum Brennen von Kalkstein sowie eine Verwendung einer Brennzone zum Brennen von vorgewärmtem Kalkstein zwecks Herstellung von Branntkalk.

Durch Brennen (Kalzinieren) kann aus Kalkstein (CaCOs) Branntkalk (Calciumoxid, CaO) erzeugt werden. Dabei wird Kohlenstoffdioxid (CO₂) freigesetzt, welches auch als Prozess-CO₂ bezeichnet wird. Diese Freisetzung ist aufgrund der zugrundeliegenden chemischen Reaktion beim Brennen von Kalkstein prozessimmanent und damit unvermeidlich.

In herkömmlichen Vorrichtungen und Verfahren zum Brennen von Kalkstein können eine Vorwärmzone, eine Brennzone und eine Kühlzone vorhanden sein. Diese Zonen sind häufig apparatetechnisch miteinander verbunden. Beispielsweise können Vorwärmzone, Brennzone (auch als Reaktionszone bezeichnet) und Kühlzone von oben nach unten in unterschiedlichen Höhen eines Ofens realisiert sein. Kalkstein und Brennstoff zum Erhitzen können dabei oben zugegeben werden, Frischluft kann unten zugegeben werden. Branntkalk und Asche werden unten abgezogen. Die Publikation EP 3 799 592 B1 beschreibt ein Verfahren zum Brennen von Kalk, bei dem Kalk in einer Wirbelschicht oder einem Fließbett unter Verwendung von Wasserdampf als Fluidisierungsmedium gebrannt wird.

Zum Zwecke der CO₂-Einsparung ist es wünschenswert, das freigesetzte CO₂ abzuscheiden. Auf diese Weise kann verhindert werden, dass das CO₂ in die Atmosphäre gelangt. CO₂ mit einem ausreichenden Reinheitsgrad kann als Rohstoff verwendet werden, beispielsweise in der chemischen Industrie. Zudem sind Verfahren bekannt, mit denen CO₂ dauerhaft gespeichert werden kann.

Es ist daher die Aufgabe der Erfindung, eine Vorrichtung und ein Verfahren zum Brennen von Kalkstein zur Verfügung zu stellen, mit denen eine Abscheidung des freigesetzten CO₂ möglich ist. Insbesondere soll eine möglichst effiziente Abscheidung erzielt werden.

Die Aufgabe wird gelöst durch die Vorrichtung gemäß Anspruch 1 sowie durch das Verfahren gemäß dem nebengeordneten Anspruch. Ausgestaltungen sind in den Unteransprüchen angegeben.

Zur Lösung der Aufgabe dient eine Vorrichtung zum Brennen von Kalkstein. Die Vorrichtung ist so eingerichtet, dass Kalkstein in die Vorrichtung hineingebracht werden kann, in der Vorrichtung Kalkstein in Branntkalk umgewandelt werden kann und der Branntkalk aus der Vorrichtung herausgebracht werden kann. Um dies erreichen zu können, kann die Vorrichtung eine Vorwärmzone zum Vorwärmen von Kalkstein, eine Brennzone zum Brennen des vorgewärmten Kalksteins zwecks Herstellung von Branntkalk und eine Kühlzone zum Abkühlen des Branntkalks umfassen. Die Vorrichtung kann eine Zuführung für Kalkstein und eine Abführung für Branntkalk aufweisen.

Die Vorrichtung kann so eingerichtet sein, dass Kalkstein unter Abwesenheit von Luft gebrannt wird, um so CO₂ mit einem gewünschten vorgegebenen Reinheitsgrad zu erhalten. Mit Abwesenheit von Luft ist gemeint, dass während des Brennens derart wenig Luft vorhanden ist, dass CO₂ mit dem gewünschten vorgegebenen Reinheitsgrad erhalten wird. Der gewünschte vorgegebene Reinheitsgrad kann bei wenigstens 70%, bei wenigstens 80%, bei wenigstens 90%, bei wenigstens 95%, bei wenigstens 98% oder bei wenigstens 99% liegen.

Die Zuführung und/oder die Abführung können gastechnisch im Wesentlichen abgeschlossen sein, um so zu erreichen, dass unter Abwesenheit von Luft gebrannt wird.

Durch die gastechnisch im Wesentlichen abgeschlossene Ausgestaltung der Zuführung und/oder der Abführung wird erreicht, dass keine oder nur eine minimale Menge Luft durch die Zuführung bzw. die Abführung zusammen mit Feststoff transportiert wird. Auf diese Weise kann z. B. ein Einströmen von Luft beim Zuführen gemeinsam mit dem Kalkstein und beim Abführen gemeinsam mit dem Branntkalk verhindert werden. So kann im Vergleich zum Stand der Technik wesentlich reineres CO₂ erzeugt werden, welches separat und möglichst konzentriert abgeschieden werden kann. Es kann zudem verhindert werden, dass das CO₂ entweicht oder übermäßig verdünnt wird. So kann ein effizientes Abscheiden erreicht werden. Der Austrag des CO₂ in die Atmosphäre kann vermieden werden. Kalk kann auch vor dem Hintergrund der in Deutschland eingeführten Emissionszertifikate weiter wirtschaftlich gebrannt werden.

Kalkstein im Sinne der Erfindung sind Calciumcarbonat (CaCOs) oder Stoffe oder Stoffgemische, die Calciumcarbonat enthalten, und zwar unabhängig von der Korngröße. Kalkstein muss je nach Rahmenbedingungen auf eine Temperatur zwischen ca. 600°C oder 650 °C und ca. 900 °C oder höher erhitzt werden, um gebrannt (kalziniert) zu werden. Bevorzugt kann dieser Temperaturbereich in einer separaten Brennzone realisiert werden, um den Ort, an dem das Prozess-CO₂ freigesetzt wird, abzugrenzen.

Eine Zone ist eine Vorrichtung oder ein Teil einer Vorrichtung, in dem ein bestimmter verfahrenstechnischer Vorgang erfolgt. Insbesondere ist jede Zone als zumindest teilweise geschlossener Hohlraum ausgeführt, in dem der Kalkstein die jeweilige, bestimmungsgemäße Reaktion durchläuft. Die Zonen können grundsätzlich in eigenständigen Aggregaten ausgeführt sein und/oder es können zwei der Zonen oder alle drei Zonen gemeinsam in einem Aggregat untergebracht sein.

Gastechnisch im Wesentlichen abgeschlossen bedeutet, dass eine unplanmäßige Gasströmung verhindert wird. Durch die Vorrichtung strömendes Material strömt nicht zusammen mit Luft durch die Brennzone hindurch. Der Anteil an Luft ist zumindest vernachlässigbar gering, damit in der Brennzone sich ein möglichst reines CO₂ - Gas bilden kann. So kann der Kalkstein zugeführt werden oder der Branntkalk abgeführt werden, ohne dass dabei ein wesentlicher Gasaustausch beispielsweise mit der Umgebung stattfindet. In einer Ausführungsform wird jede Gasströmung im Wesentlichen verhindert. Die Atmosphäre in der Vorrichtung ist insbesondere im Wesentlichen abgedichtet. Geringfügiger Gasaustausch, beispielsweise durch Gase, die in Hohlräumen zwischen losem Schüttgut enthalten sind oder durch kurzzeitig geöffnete Öffnungen sind dabei nicht ausgeschlossen. Ziel ist jedoch, durch den gastechnischen Abschluss möglichst weitgehend einen Transport von Luft zusammen mit dem Material zu verhindern. Das Merkmal gastechnisch abgeschlossen bezieht sich auf Gase. Eine kontinuierliche oder diskontinuierliche Strömung von Kalkstein oder Branntkalk kann dagegen möglich sein. Gase im Sinne der Erfindung umfasst Gasgemische.

Die Zuführung dient dem Zuführen von Kalkstein zu der Vorrichtung oder zu einem bestimmten Teil der Vorrichtung. Das Zuführen von Kalkstein wird auch als Aufgabe bezeichnet. Die Abführung dient dem Abführen von Branntkalk aus der Vorrichtung oder aus einem bestimmten Teil der Vorrichtung. Das Abführen von Branntkalk wird auch als Ausgabe bezeichnet.

Typischerweise wird in der Vorwärmzone der Kalkstein auf eine Temperatur von wenigstens 400°C oder wenigstens 500 °C aufgeheizt werden. Der Kalkstein kann in der Vorwärmzone auf maximal 600°C oder maximal 650°C oder maximal 700°C aufgewärmt werden. Dies ist u. a. abhängig von der Zusammensetzung und Korngröße des Kalksteins. Die Temperatur wird so gewählt, dass noch keine Zersetzung des CaCOs erfolgt und folglich noch kein CO₂ oder zumindest so gut wie kein CO₂ freigesetzt wird. Vorteilhaft wird die Temperatur jedoch nahe dieser Schwelle gewählt, da ein Erhitzen in der Vorwärmzone typischerweise einfacher und/oder effizienter erfolgen kann als in der Brennzone. Da hier insbesondere keine bis sehr geringe Gasmengen freigesetzt werden und daher kaum Kontamination oder Verdünnung des freigesetzten CO₂ zu befürchten ist, ist eine gastechnische Verbindung der Vorwärmzone und der Brennzone nicht grundsätzlich schädlich. Mit gastechnischer Verbindung zwischen Vorwärmzone und Brennzone ist gemeint, dass Gas aus der Vorwärmzone in die Brennzone strömen kann. In diesem Fall ist aber dafür zu sorgen, dass kein Gas zusammen mit dem Kalkstein in die Vorwärmzone gelangen kann. Es ist aber zu bevorzugen, dass keine gastechnische Verbindung zwischen der Vorwärmzone und der Brennzone vorhanden ist. In diesem Fall ist die Verbindung zwischen der Vorwärmzone und der Brennzone so, dass während des Betriebs praktisch ausschließlich vorgewärmter Kalkstein in die Brennzone hineingelangt.

Die Vorwärmzone kann direkt beheizt werden. Im Falle einer direkten Heizeinrichtung wird erzeugte Wärme grundsätzlich direkt der jeweiligen Zone zugeführt und/oder dort erzeugt. Es können bei einer direkten elektrischen Heizung z. B. elektrische Heizwendeln im Inneren der Vorwärmzone angeordnet sein. Es kann eine direkte Beheizung mit Brennstofflanzen erfolgen. Da im Vergleich zu herkömmlichen Öfen jedoch niedrigere Temperaturen benötigt werden, werden auch in diesem Fall Energie und CO₂-Emissionen eingespart. Auch CO₂-neutrale Brennstoffe können verwendet werden. Alternativ oder ergänzend kann eine direkte Beheizung mit heißem Gas erfolgen, wie weiter unten beschrieben. Alternativ oder ergänzend kann die Vorwärmzone indirekt beheizt werden. Dies kann mit heißem CO₂ erfolgen, wie weiter unten beschrieben.

Fällt in einem Verbrennungsprozess der Vorrichtung CO₂ an, etwa beim Heizen der Vorwärmzone, oder in Form von Prozess-CO₂ aus MgCOs-Anteilen im Kalkstein, welches bereits bei den vorgesehenen Vorwärmtemperaturen entstehen kann, kann dieses separiert werden, beispielsweise mittels Aminwäsche, Festbettreaktor, Looping wie etwa CaO-CO₂-Looping oder Membrantechnologie (engl.: *Carbon Capture Process*) oder wegen der nur geringen CO₂-Anteile im Abgas mittels Durchleiten durch CaO, Ca(OH₂) oder Ca(OH₂)-Suspensionen.

Die Vorwärmzone kann eine zylinderförmige Grundform aufweisen. Der Durchmesser der Vorwärmzone kann größer sein als 0,25 m oder als 1 m und/ oder kleiner sein als 2,5 m oder als 5 m. Im Falle einer indirekten Erhitzung kann der Durchmesser z. B. wenigstens 0,25 m oder wenigstens 1,5 m und/ oder nicht mehr als 5 m oder nicht mehr als 2,5 m betragen. Im Falle einer direkten Erhitzung oder Befeuerung kann der Durchmesser z. B. wenigstens 0,5 m oder wenigstens 1 m und/oder nicht mehr als 1,5 m oder nicht mehr als 5 m betragen. Die Gesamtlänge der Vorwärmzone kann wenigstens 5 m oder wenigstens 7 m und/ oder nicht mehr als 20 m oder nicht mehr als 13 m betragen. Die Gesamtlänge kann beispielsweise ca. 10 m betragen.

In der Kühlzone wird der Branntkalk gekühlt, insbesondere auf eine Temperatur unter 100 °C. Der Branntkalk kann bei Eintritt in die Kühlzone eine Temperatur zwischen 600 °C und 950 °C aufweisen. Die Technik des Kühlens ist von der Korngröße des verwendeten Kalksteins und damit des Branntkalks abhängig. Wird körniger Kalkstein verwendet, kann Kühlgas, beispielsweise Umgebungsluft, direkt durch den Branntkalk geblasen werden, um diesen zu kühlen. Dazu kann beispielsweise ein Sieb, Trommelkühler, Fließbett- oder Flugschichtkühler verwendet werden. Direkter Kontakt zwischen dem Kühlgas und dem Branntkalk ermöglicht eine besonders schnelle und effiziente Kühlung. Wird hingegen pulverförmiger (mehlförmiger) Kalkstein verwendet, erfolgt die Kühlung typischerweise indirekt über Wärmetauscher, beispielsweise mittels eines Rohrs und/oder einer Trennwand, sodass der ebenfalls pulverförmige Branntkalk nicht mitgerissen wird.

Der Transport des Branntkalks in der Kühlzone oder durch die Kühlzone kann durch Schwerkraft erfolgen. Alternativ kann die Kühlzone analog zu einem Drehrohrofen eine zylindrische Grundform aufweisen und um die Mittelachse drehbar angeordnet sein. Die Kühlzone kann dann im Wesentlichen horizontal ausgerichtet und/oder leicht geneigt sein, sodass bei der Drehbewegung zusätzlich zur Durchmischung des im Inneren befindlichen Materials ein Transport entlang der Mittelachse erfolgt. Der Transport kann alternativ oder ergänzend ähnlich wie eine Siebmaschine durch Schwingbewegungen und/oder stückchenweise schiebend mit einer Schubeinrichtung, z. B. einem Schubbalken, erfolgen. Die Auswahl der Transporttechnik hängt ebenfalls von der Körnung des Materials ab.

In einer Ausgestaltung dient die Zuführung zum Zuführen von vorgewärmtem Kalkstein in die Brennzone. In einer Ausgestaltung dient die Abführung zum Abführen von heißem Branntkalk aus der Brennzone.

Typischerweise ist die Zuführung demnach zwischen der Vorwärmzone und der Brennzone angeordnet und/oder die Abführung ist zwischen der Brennzone und der Kühlzone angeordnet. Mit anderen Worten ist die Zufuhr des vorgewärmten Kalksteins in die Brennzone und/oder die Abfuhr des heißen Branntkalks aus der Brennzone gastechnisch im Wesentlichen abgeschlossen. Es wird also eine unplanmäßige Gasströmung in die Brennzone und/oder aus dieser hinaus verhindert. So wird ein Einströmen von Luft beim Zuführen gemeinsam mit dem vorgewärmten Kalkstein und/oder beim Abführen des Branntkalks, ggf. zur Kühlung, verhindert. Zudem kann der Bereich, in dem das CO₂ freigesetzt wird, möglichst eng abgegrenzt werden. Beispielsweise kann die Atmosphäre der Brennzone im Wesentlichen abgedichtet ausgeführt sein. Auf diese Weise können Vermischungen vermieden werden und es kann besonders reines CO₂ in der Brennzone erzeugt werden.

Ist die Zuführung gastechnisch im Wesentlichen abgeschlossen, wird eine Gas-Strömung von der Vorwärmzone in die Brennzone und umgekehrt zumindest im Wesentlichen verhindert. Ist die Abführung gastechnisch im Wesentlichen abgeschlossen, wird eine Gas-Strömung von der Brennzone in die Kühlzone und umgekehrt zumindest im Wesentlichen verhindert. Sind sowohl Zuführung als auch Abführung gastechnisch im Wesentlichen abgeschlossen, können in allen drei Zonen getrennte, unterschiedliche Gasatmosphären vorhanden sein.

Sind die Vorwärmzone und/oder die Kühlzone von der Brennzone gastechnisch zumindest im Wesentlichen getrennt, kann die jeweilige Zone zudem auf technisch einfache Weise ausgeführt werden, weil das CO₂ im Betrieb nicht in diese Zone gelangt und deshalb dort keine gastechnisch abgeschlossene Ausführung, beispielsweise gegenüber der Umgebung, notwendig ist. Insbesondere ist die Brennzone von der Vorwärmzone und/oder der Kühlzone gastechnisch getrennt.

Ist die Kühlzone von der Brennzone gastechnisch zumindest im Wesentlichen getrennt, wird ferner eine Recarbonatisierung weitgehend verhindert. Dieser ungewünschte Effekt tritt auf, wenn Branntkalk in einem bestimmten Temperaturfenster oberhalb von 500 °C mit einer CO₂-reichen Atmosphäre in Kontakt kommt. Der Branntkalk kann dann wieder CO₂ aufnehmen. Da das Prozess-CO₂ nicht in die Kühlzone gelangt, in der dieses Temperaturfenster durchlaufen wird, und daher in der Kühlzone nur eine sehr geringe CO₂-Konzentration vorliegt, ist keine oder kaum Recarbonatisierung zu erwarten. Es können durch die Erfindung Rest-CO₂-Grenzwerte von 5 Gew.-% 2 bis 3 Gew.-% sicher eingehalten werden. Kleinere Rest-CO₂-Gernzwerte können ebenfalls erreicht, so zum Beispiel von 3 Gew.-% oder 2 Gew.-%.

In einer Ausgestaltung weist die Vorrichtung einen Drehrohrofen auf, welcher die Brennzone ausbildet. Ein Drehrohrofen ist ein Ofen mit zylindrischer Grundform, der um seine Mittelachse drehbar angeordnet und insbesondere für eine Drehung angetrieben ist. Ein Drehrohrofen ist im Wesentlichen horizontal ausgerichtet und/oder leicht geneigt, sodass bei der Drehbewegung zusätzlich zur Durchmischung des im Inneren befindlichen Materials ein Transport entlang der Mittelachse erfolgt. Ein Drehrohrofen ist im Rahmen der Erfindung besonders geeignet, da er auf einfache Weise eine gastechnische abgeschlossene Zuführung und ggf. Abführung ermöglicht, so dass verhindert wird, dass signifikante Mengen Luft in die Brennzone eingetragen werden und signifikante Mengen CO₂ aus der Brennzone ausgetragen werden. Auch ein Abzug des freigesetzten CO₂ aus einem Drehrohrofen ist technisch möglich und an sich bekannt. Zudem ist ein Drehrohrofen für vergleichbare Anwendungen vielfach bewährt. So sind etwa geeignete, insbesondere indirekte, Heizeinrichtungen für die benötigten Temperaturbereiche verfügbar.

Der Drehrohrofen kann einen Durchmesser größer als 0,5 m oder größer als 1 oder größer als 1,5 m und/ oder kleiner als 5 m oder kleiner als 3 m oder kleiner als 2,5 m aufweisen. Die Gesamtlänge der Brennzone kann wenigstens 5 m oder wenigstens 7 m und/oder nicht mehr als 20 m betragen. Die Gesamtlänge der Brennzone kann beispielsweise ca. 10 m betragen.

Alternativ kann die Vorrichtung einen Flash-Kalzinierofen (englisch: *flash calciner*) aufweisen, welcher die Brennzone ausbildet. Dieser ist ebenfalls zum Brennen des Kalks unter den erfindungsgemäßen Bedingungen geeignet, technisch allerdings aufwändiger. Als weitere Alternative kann die Vorrichtung einen Wirbelschichtreaktor aufweisen, welcher die Brennzone ausbildet. Dies ist insbesondere dann möglich, wenn der vorgewärmte Kalkstein vergleichsweise fein und fluidisierbar ist. Die Fluidisierung kann mit dem heißen CO₂ erfolgen. Beispielsweise kann eine Wirbelschichtfeuerung verwendet werden. Auch kann die Brennzone in Zyklon- oder Schachtform ausgeführt werden. Die Brennzone kann sich vertikal erstrecken, um einen Transport durch die Brennzone hindurch zu erleichtern. Die Brennzone kann an der Oberseite einen Einlass für Kalkstein und/oder an der Unterseite einen Auslass für Branntkalk aufweisen. Durch den Einlass für Kalkstein hindurch kann Kalkstein in die Brennzone gebracht werden. Durch den Auslass für Branntkalk hindurch kann Branntkalk aus der Brennzone entfernt werden.

In einer Ausführungsform kann heißes CO₂ aus der Brennzone zurück in die Brennzone geführt werden, um den Wärmeübergang zu verbessern. Beispielsweise können diese zur Unterstützung der Fluidisierung bei einem Wirbelschichtverfahren verwendet werden.

In einer Ausführungsform ist die Brennzone möglichst gasdicht. Beispielsweise kann ein gasdichter Drehrohrofen verwendet werden. Durch im Bereich der Brennzone direkte oder indirekte elektrische Erhitzung kann, im Vergleich zu einer Verfeuerung von Brennstoffen, ein exakteres Temperaturniveau gefahren werden, welches gezielt einen Versinterungsprozess in Folge höherer Temperaturen vermeiden oder bewusst erzielen kann. In der Regel wird ein Versinterungsprozess vermieden. In der Regel erfolgt kein Sintern des Branntkalks.

In einer Ausgestaltung weist die Vorrichtung eine CO₂-Abführeinrichtung zum Abführen von in der Brennzone freigesetztem CO₂ auf. Abführen meint Bewegen des CO₂ aus der Brennzone hinaus zu einem Zielort. Es wird also eine CO₂-haltige Strömung erzeugt. Auf diese Weise kann das hoch konzentrierte CO₂ abtransportiert werden und beispielsweise gesammelt und/oder einer geeigneten Vorrichtung zur Weiterverarbeitung zugeführt werden. In einer einfachen Ausführungsform kann die CO₂-Abführeinrichtung ein Auslass sein, an den ggf. ein Strömungskanal wie z. B. eine Rohrleitung anschließt. Die Abführeinrichtung kann eine Absaugeinrichtung wie z. B. ein Gebläse umfassen, um einen CO₂-Volumenstrom aus der Brennzone hinaus zu gewährleisten. In dem Fall, dass der Partialdruck des freigesetzten CO₂ bereits ausreichend groß ist, um eine Abführung des CO₂ zu erreichen, ist eine Absaugeinrichtung nicht unbedingt notwendig, kann jedoch für eine bessere Abführung sorgen. Bevorzugt ist die CO₂-Abführeinrichtung so ausgestaltet, dass ein Eintritt von Luft verhindert wird. Grundsätzlich kann die CO₂-Abführeinrichtung an einem beliebigen Teil der Vorrichtung angeordnet sein, der in gastechnischer Verbindung mit der Brennzone steht. Typischerweise ist die CO₂-Abführeinrichtung direkt an der Brennzone angeordnet.

Die Zuführung kann eine Zufuhrschleuse als Einlass aufweisen, um den Kalkstein in die Vorrichtung, insbesondere in die Brennzone, zu fördern. Die Abführung kann eine Abfuhrschleuse als Auslass aufweisen, um den Branntkalk aus der Vorrichtung heraus, insbesondere aus der Brennzone heraus, zu fördern.

Trotz der gastechnisch im Wesentlichen abgeschlossenen Ausgestaltung der Zuführung und/oder der Abführung kann der zu brennende Kalk in die Brennzone eingetragen werden und der Branntkalk kann aus der Brennzone ausgegeben werden. Eine Zufuhrschleuse bzw. Abfuhrschleuse ist eine Vorrichtung, die die Zufuhr bzw. Abfuhr des jeweiligen Materials in die Brennzone bzw. daraus hinaus ermöglicht und gleichzeitig eine Zufuhr von Gas in die Brennzone und ein Austreten von Gas aus der Brennzone verhindern kann. Auf diese Weise wird mit geringem technischem Aufwand eine besonders hohe Reinheit des CO₂ ermöglicht. Derartige Schleusen können mit beliebigen Brennzonen kombiniert werden.

In einer Ausgestaltung sind die Zufuhrschleuse und/oder die Abfuhrschleuse als Zellenradschleuse, Förderschnecke, Feststoffpumpe oder Doppelpendelklappe ausgestaltet. Diese Schleusen sind bewährt für das im Wesentlichen gasdichte Transportieren und ggf. Dosieren von körnigem oder pulverförmigem Material. Zudem können derartige Schleusen auch für Material hoher Temperatur ausgelegt sein. Die Zufuhrschleuse und/oder die Abfuhrschleuse kann einen Antrieb zum aktiven Fördern des Materials umfassen. Insbesondere ist die Zufuhrschleuse und/oder die Abfuhrschleuse zum Dosieren des jeweiligen Materials eingerichtet. So kann ein definierter Volumenstrom des Materials geschleust werden.

Die Zufuhrschleuse und/oder die Abfuhrschleuse sind in einer Ausführungsform so ausgestaltet, dass eine mechanische Verdichtung des jeweiligen losen Materials erfolgt. Im Fall der Zufuhrschleuse wird Luft vor dem Eintrag aus dem vorgewärmten Kalkstein entfernt, so dass der Gehalt an Luft bei der Aufgabe minimiert werden kann. Analog dazu wird im Falle der Abfuhrschleuse der Austrag von CO₂ verhindert, wenn durch mechanische Verdichtung des gebrannten Kalks CO₂ aus diesem entfernt wird. Im Falle einer Zellenradschleuse kann etwa ein dichtes Materialbett oberhalb der Zellenradschleuse bereitgestellt sein, sodass dichtes Material gefördert wird. Bei einer Förderschnecke kann durch geeignete Anordnung der Windungen eine Verdichtung des zu fördernden Materials erzielt werden. Durch die Verdichtung kann erreicht werden, dass praktisch kein Gas zusammen mit dem zu fördernden Material gefördert wird.

Eine Zufuhrschleuse und/oder die Abfuhrschleuse können so sein, dass Material kontinuierlich oder batchweise hindurchgeschleust werden kann. Eine Zufuhrschleuse und/oder die Abfuhrschleuse können einen Schleusenraum mit einem Schleuseneingang und einem Schleusenausgang umfassen. Der Schleuseneingang kann an der Oberseite des Schleusenraums angeordnet sein, um durch Schwerkraft Material wie Kalkstein oder Branntkalk in den Schleusenraum hineintransportieren zu können. Der Schleusenausgang kann an der Unterseite des Schleusenraums angeordnet sein, um durch Schwerkraft Material wie Kalkstein oder Branntkalk aus den Schleusenraum hinaustransportieren zu können.

Der Schleusenraum kann beispielsweise gasdicht verschlossen werden.

Der Schleusenausgang kann beispielsweise gasdicht verschlossen sein. Material wie Kalkstein oder Kalk bzw. Branntkalk können dann durch den Schleuseneingang hindurch in den Schleusenraum hineintransportiert werden. Im Anschluss daran kann der Schleuseneingang gasdicht verschlossen werden. Der Schleusenraum kann mit einer Pumpe so verbunden sein, dass Luft aus dem Schleusenraum herausgepumpt werden kann. Die Verbindung zwischen dem Schleusenraum und der Pumpe kann ein Ventil umfassen. Die Pumpe kann Luft aus dem Schleusenraum herauspumpen. Ist Luft aus dem Schleusenraum herausgepumpt worden, so kann der Schleusenausgang geöffnet werden. Das im Schleusenraum befindliche Material kann dann durch den Schleusenausgang hindurch aus dem Schleusenraum heraustransportiert werden. Es kann so eine Zuführung bzw. Abführung realisiert werden, die gastechnisch zumindest im Wesentlichen abgeschlossen ist.

Der Schleusenausgang kann verschlossen sein, sodass Material nicht durch den Schleusenausgang hindurchgelangen kann. Der Schleusenausgang kann gasdicht verschlossen sein. Material, so zum Beispiel Kalkstein oder Kalk bzw. Branntkalk, kann dann durch den Schleuseneingang hindurch in den Schleusenraum hineintransportiert werden. Im Anschluss daran kann der Schleusenraum beispielsweise nur zum Teil mit Material gefüllt sein. Mithilfe eines Kolbens kann das in den Schleusenraum hineintransportierte Material verdichtet werden. Der Kolben kann Bohrungen aufweisen, durch die hindurch Luft aus dem Material entweichen kann. Es kann ein Spalt, so zum Beispiel ein Ringspalt, zwischen dem Kolben und benachbarten Wänden des Schleusenraums vorhanden sein. Wird das Material durch den Kolben verdichtet, so kann Luft aus dem Material durch den Spalt hindurch entweichen. Im Anschluss daran kann weiteres Material durch den Schleuseneingang hindurch in den Schleusenraum hineintransportiert werden. Es kann erneut mithilfe des Kolbens verdichtet werden. Ist der Schleusenraum in gewünschter Weise mit verdichtetem Material gefüllt worden, so kann das verdichtete Material durch den Schleusenausgang hindurch aus der Schleuse heraustransportiert werden. Vorher kann der Schleuseneingang verschlossen worden sein, so zum Beispiel gasdicht verschlossen worden sein. Es kann so eine Zuführung bzw. Abführung für Material realisiert werden, die gastechnisch zumindest im Wesentlichen abgeschlossen ist.

Eine Zufuhrschleuse und/oder die Abfuhrschleuse können mit einer Flüssigkeitszufuhr verbunden sein, über die eine Flüssigkeit wie zum Beispiel Wasser in den Schleusenraum zugeführt werden kann. Befindet sich Kalkstein im Schleusenraum, so kann im Anschluss daran Flüssigkeit wie Wasser hinzugefügt werden, um Luft zu verdrängen. Die Flüssigkeit und/oder die Flüssigkeitsmenge können so ausgewählt sein, dass diese die Entstehung von Branntkalk in der Brennzone nicht behindern. Eine hinreichend geringe Menge an Wasser kann sich sogar positiv auswirken. Vor der Zuführung von Flüssigkeit kann der Kalkstein verdichtet worden sein. Die Flüssigkeitszufuhr kann ein Ventil umfassen, das geöffnet sowie geschlossen werden kann, um die Zufuhr von Flüssigkeit regeln zu können. Die Flüssigkeitszufuhr kann eine Pumpe umfassen, durch die Flüssigkeit in die Schleuse gepumpt werden kann. Die Flüssigkeitszufuhr kann eine Messeinrichtung umfassen, mit der die Menge an zugeführter Flüssigkeit gemessen werden kann. Die Flüssigkeitszufuhr kann eine Steuereinrichtung umfassen, mit der die Menge an zugeführter Flüssigkeit in Abhängigkeit von der gemessenen zugeführten Flüssigkeit gesteuert werden kann. Die Flüssigkeitszufuhr kann mit einem Behälter für Flüssigkeit oder einer Leitung für Flüssigkeit wie zum Beispiel einer Wasserleitung verbunden sein.

Es kann eine Schleuse für CO₂ vorhanden sein, über die CO₂ beispielsweise aus der Brennzone oder aus einem CO₂ - Sammelbehälter herausgeschleust werden kann. Diese Schleuse für CO₂ kann so sein, dass Luft nicht durch die Schleuse für CO₂ in die Brennzone hineingelangen kann. Die Schleuse für CO₂ kann ein Ventil umfassen, über das CO₂ herausströmen kann. Das Ventil kann so sein, dass Gas das Ventil nur in einer Richtung passieren kann. Es kann dann Luft nicht durch das Ventil hindurch in die Brennzone oder in den CO₂ - Sammelbehälter hineinströmen.

Die Schleuse für CO₂ kann ein Ventil wie zum Beispiel ein Magnetventil umfassen, das geöffnet und geschlossen werden kann. Ein CO₂ - Sammelbehälter kann gastechnisch mit der Schleuse für CO₂ verbunden werden. Im Anschluss daran kann die Schleuse für CO₂ geöffnet werden, damit CO₂ in den CO₂ - Sammelbehälter hineinströmen kann. Ist der CO₂ - Sammelbehälter mit CO₂ gefüllt worden, so können der CO₂ - Sammelbehälter sowie das Ventil geschlossen werden. Der CO₂ - Sammelbehälter kann dann von der Schleuse getrennt werden. Das CO₂ kann dann zusammen mit dem Sammelbehälter zu einem gewünschten Zielort transportiert werden.

In einer Ausgestaltung weist die Vorrichtung eine Heizeinrichtung zum Erhitzen des vorgewärmten Kalksteins in der Brennzone auf. Insbesondere ist die Heizeinrichtung eine indirekte Heizeinrichtung oder eine elektrische Heizeinrichtung.

Eine indirekte Heizeinrichtung ist eine Heizeinrichtung, bei der ein fester, flüssiger und/oder gasförmiger Wärmeübertrager erhitzt wird und dieser Wärmeübertrager dann das Material, hier den Kalkstein, und/oder die Atmosphäre der jeweiligen Zone, hier der Brennzone, erhitzt. Der Wärmeübertrager kann beispielsweise eine Fläche im Inneren der Brennzone sein oder umfassen. Das Erhitzen des Wärmeübertragers kann beispielsweise durch Verbrennung oder elektrisch erfolgen. Es erfolgt keine Verbrennung, bei der Verbrennungsabgase in die Atmosphäre der Brennzone gelangen. Auf diese Weise wird sichergestellt, dass freigesetztes CO₂ nicht verunreinigt und/oder verdünnt wird. Eine elektrische Heizeinrichtung kann direkt oder indirekt sein. Dies ist unabhängig von der Ausgestaltung der Brennzone möglich.

Eine direkte elektrische Heizeinrichtung weist insbesondere bei einem Drehrohrofen eine hohe Effizienz auf, da Wärmeverluste sehr geringgehalten werden. Zudem kann im Gegensatz zu einer indirekten Erhitzung im Inneren des Drehrohrofens eine isolierende Feuerfestauskleidung und/oder Normalstahl verwendet werden. Eine elektrische Erhitzung ermöglicht eine exakte Steuerung der Temperatur. Es treten keine erhöhten Spitzentemperaturen auf, wie dies bei offenen Flammen der Fall ist. Somit wird die Gefahr einer Versinterung der Kalksteinpartikel an der Oberfläche verringert, sodass das Risiko, dass der CO₂-Austrag dadurch erschwert wird, verringert wird.

In einer Ausgestaltung weist die Heizeinrichtung eine Verbrennungseinrichtung mit einer Zufuhr für einen Brennstoff sowie einer Zufuhr für reinen Sauerstoff auf. Reiner Sauerstoff im Sinne der Erfindung meint Sauerstoff mit einer Reinheit von wenigstens etwa 95% in Abgrenzung von Luft mit einem wesentlich geringeren Sauerstoffgehalt. Bei einer Verbrennung mit reinem Sauerstoff kann bei Wahl eines geeigneten Brennstoffs als Verbrennungsabgas weitgehend reines CO₂ anfallen. Somit wird die Menge des anfallenden CO₂ in der Brennzone weiter erhöht und es kann eine höhere CO₂-Abscheidung erfolgen. In dieser Ausgestaltung kann die Verbrennung dementsprechend im Inneren der Brennzone erfolgen. Es kann also CO₂ als Industriegas erzeugt werden. Der Reinheitsgrad des in der Brennzone erzeugten CO₂ kann beispielsweise bei wenigstens 80% oder bei wenigstens 90% oder bei wenigstens 95% liegen.

In einer Ausführungsform umfasst die Vorrichtung eine Mühle zum Mahlen des Kalksteins. Die Mühle ist insbesondere räumlich getrennt von den anderen Teilen der Vorrichtung.

In einer Ausgestaltung weist die Vorrichtung eine CO₂-Leitung auf, mit der heißes CO₂ aus der Brennzone so zur Vorwärmzone geführt wird, dass Wärme ausgetauscht werden kann. Hierbei wird die thermische Energie, die der Brennzone gemeinsam mit dem CO₂ entnommen wird, dem Prozess wieder zugeführt und genutzt, sodass die Energieeffizienz des Verfahrens erhöht wird. Insbesondere wird die thermische Energie des heißen CO₂ über einen Wärmetauscher auf die Atmosphäre und/oder das Material in der Vorwärmzone übertragen, um die hohe Reinheit des CO₂ nicht zu beeinträchtigen. So findet kein Stoffaustausch zwischen dem CO₂ und der Atmosphäre der Vorwärmzone statt.

Das heiße CO₂ aus der Brennzone ist trotz der hohen Reinheit strenggenommen kein reines CO₂, sondern ein Gasgemisch, das neben dem CO₂ gewisse Verunreinigungen aufweisen kann. Es weist typischerweise eine Temperatur auf, die der Temperatur der Atmosphäre der Brennzone entspricht, also beispielsweise zwischen 650 °C und 1200 °C.

In einer Ausgestaltung weist die Vorrichtung eine Heißgasleitung auf, mit der heißes Gas aus der Kühlzone in die Vorwärmzone geführt wird. Hierbei wird die während der Kühlung abgeführte Wärme der Vorwärmung zugeführt, um die anfallende Wärme zu nutzen und damit die Energieeffizienz des Verfahrens zu erhöhen. Das Temperaturniveau des heißen Gases reicht mit bis zu ca. °C oder bis zu ca. 1.000 °C für eine Erwärmung der Brennzone nicht aus. Das heiße Gas kann in der Vorwärmzone zum direkten oder indirekten Heizen verwendet werden. Im Falle einer direkten Heizeinrichtung wird erzeugte Wärme direkt der jeweiligen Zone zugeführt. Hier würde also das heiße Gas direkt in die Vorwärmzone eingeführt, um dort die Atmosphäre und/oder das Material zu erhitzen. Dies ist insbesondere bei körnigem Kalkstein möglich. Im Falle einer indirekten Heizeinrichtung wird die thermische Energie des heißen Gases über einen Wärmetauscher auf die Atmosphäre und/oder das Material übertragen.

Das heiße Gas kann analog zum oben Beschriebenen direkt aus der Kühlzone entnommen werden, insbesondere bei Verwendung körnigen Kalksteins, oder aus einem in der Kühlzone angeordneten Wärmetauscher entnommen werden, beispielsweise bei pulverförmigem Kalkstein.

Wärmetauscher können an unterschiedlichen Stellen der Vorrichtung verwendet werden. Wärmetauscher können beispielsweise als Rohrbündel, Plattenwärmetauscher, mehrwandige Trommelwärmetauscher oder Wärmerohr (engl.: *heat pipe*) ausgebildet sein.

In einer Ausgestaltung weist die Vorrichtung eine erste Leitung zwischen der Vorwärmzone und der Brennzone auf. Durch die erste Leitung kann vorgewärmter Kalkstein von der Vorwärmzone in die Brennzone geleitet werden. In einer Ausgestaltung weist die Vorrichtung eine zweite Leitung zwischen der Brennzone und der Kühlzone auf. Durch die zweite Leitung kann Branntkalk von der Brennzone in die Kühlzone geleitet werden.

In einer Ausführungsform können die Vorwärmzone und die Brennzone und/oder die Brennzone und die Kühlzone in unmittelbar oder mittelbar aufeinander folgenden Bereichen eines Drehrohrs ausgestaltet sein.

Ein weiterer Aspekt der Erfindung ist eine Verwendung einer Brennzone zum Brennen von vorgewärmtem Kalkstein zwecks Herstellung von Branntkalk. Die Brennzone weist eine Zuführung für vorgewärmten Kalkstein und eine Abführung für Branntkalk auf. Die Zuführung und/oder die Abführung sind gastechnisch im Wesentlichen abgeschlossen. Alle Merkmale, Wirkungen und Vorteile der eingangs genannten Vorrichtung und des nachfolgend beschriebenen Verfahrens gelten auch für die Verwendung und umgekehrt.

Die Vorwärmzone und die Kühlzone können unmittelbar benachbart angeordnet sein. Die Brennzone liegt dann nicht zwischen der Vorwärmzone und der Kühlzone. Die Vorwärmzone kann in der Kühlzone angeordnet sein. Die Kühlzone kann in der Vorwärmzone angeordnet sein.

Ein weiterer Aspekt der Erfindung ist ein Verfahren zum Brennen von Kalkstein, insbesondere in einer bevorzugt erfindungsgemäßen Vorrichtung zum Brennen von Kalkstein.

Das Verfahren zum Brennen von Kalkstein wird in einer Vorrichtung zum Brennen von Kalkstein durchgeführt. Das Verfahren umfasst ein Vorwärmen von Kalkstein in der Vorrichtung, ein Brennen des vorgewärmten Kalksteins zum Herstellen von Branntkalk in der Vorrichtung und Abkühlen des Branntkalks in der Vorrichtung. Das Brennen des Kalksteins erfolgt so unter Ausschluss von Luft, dass CO₂ mit einem Reinheitsgrad von wenigstens 70% oder wenigstens 80% oder wenigstens 90% oder wenigstens 95% oder wenigstens 98% oder wenigstens 99% entsteht. Die Vorrichtung kann einen Raum umfassen, in dem vorgewärmt, gebrannt und abgekühlt wird. Der Raum kann so mit Kalkstein gefüllt worden sein, dass in dem Raum keine Anteile von Luft vorhanden sind oder nur derart geringe Anteile von Luft, dass durch das Brennen von Kalkstein CO₂ mit einem gewünschten vorgegebenen Reinheitsgrad entsteht.

Die Vorrichtung kann drei Räume umfassen. In einem ersten der drei Räume kann Kalkstein vorgewärmt werden. In einem zweiten der drei Räume kann vorgewärmter Kalkstein gebrannt werden. In einem dritten der drei Räume kann durch das Brennen von Kalkstein entstandener Branntkalk abgekühlt werden.

Damit der Anteil von Luft gering genug ist, um CO₂ mit einem gewünschten vorgegebenen Reinheitsgrad erhalten, kann beispielsweise der Raum, in dem Kalkstein gebrannt wird, luftdicht verschlossen werden, nachdem Kalkstein in den Raum gebracht worden ist. Im Anschluss daran kann aus dem Raum über eine Pumpe Luft abgesaugt werden. Um Beschädigungen der Pumpe zu vermeiden, kann die Leitung für Luft, die die Pumpe mit dem Raum verbindet, in dem Kalkstein gebrannt wird, gekühlt werden. Das Kühlen kann durch einen Wärmetauscher erfolgen. Durch den Wärmetauscher kann ggfs. Wärme einem getrennten ersten Raum zugeführt werden, in dem Kalkstein vorgewärmt wird.

Damit der Anteil von Luft gering genug ist, um CO₂ mit einem gewünschten vorgegebenen Reinheitsgrad erhalten, kann beispielsweise der Raum, in dem Kalkstein gebrannt wird, derart vollständig gefüllt worden sein, dass der Anteil von Luft in dem Raum gering genug ist, um CO₂ mit dem gewünschten vorgegebenen Reinheitsgrad erhalten zu können. Der Raum kann entsprechend vollständig mit Branntkalk gefüllt worden sein. In dem Raum kann zusätzlich eine Flüssigkeit wie Wasser vorhanden sein, um Luft zu verdrängen.

Das Verfahren kann Vorwärmen von Kalkstein in einer Vorwärmzone, Brennen des vorgewärmten Kalksteins zum Herstellen von Branntkalk in einer Brennzone und Abkühlen des Branntkalks in einer Kühlzone umfassen. Eine Zone ist von einer anderen Zone getrennt. Die Vorrichtung kann eine Zuführung für Kalkstein und eine Abführung für Branntkalk aufweisen. Die Zuführung und/oder die Abführung können gastechnisch im Wesentlichen abgeschlossen sein. Alle Merkmale, Wirkungen und Vorteile der eingangs genannten Vorrichtung gelten auch für das Verfahren und umgekehrt. In der Brennzone kann CO₂ mit einem hohen Reinheitsgrad von beispielsweise wenigstens 70% oder wenigstens 80% oder wenigstens 90% oder wenigstens 95% oder wenigstens 98% oder wenigstens 99% erzeugt werden.

In einer Ausgestaltung wird beim Brennen freigesetztes CO₂ abgeführt. Insbesondere wird das CO₂ aufgefangen. Das abgeführte CO₂ kann effizient weiterverwendet werden, beispielsweise durch Abkühlen, Verdichten und/oder Verflüssigen. Es kann für Speicherung und/oder Transport vorbereitet werden, gespeichert und/oder transportiert werden. Dies ist besonders effizient möglich, da erfindungsgemäß besonders hoch konzentriertes CO₂ erhalten werden kann. Ein vorheriges Aufkonzentrieren, was beispielsweise bei einem CO₂-Gehalt im Bereich von 20% nötig wäre und ineffizient, technisch aufwändig und mit hohen Betriebskosten verbunden wäre, ist nicht nötig. Das abgeführte CO₂ kann vor diesen Schritten zunächst verwendet werden, um die Vorwärmzone zu erhitzen.

In einer Ausgestaltung weist der Kalkstein eine mittlere Korngröße auf, die wenigstens 1 mm beträgt, insbesondere wenigstens 2 mm und/oder die höchstens 7 mm beträgt, insbesondere höchstens 5 mm.

Feinere mittlere Körnungen bis hin zu pulver- bzw. mehlförmig gemahlenem Kalkstein benötigen zum einen wesentlich höhere Energiekosten zum Mahlen. Im Vergleich zu einem Mahlen auf maximal 5 mm erhöht sich die benötigte Energie um etwa den Faktor 10. Darüber hinaus ist die Handhabbarkeit feinen Pulvers wesentlich komplizierter. Auch ist eine Abführung von Gas mit der genannten mittleren Korngröße einfacher als mit pulverförmigem Kalkstein, da kein oder zumindest kaum Pulver mitgerissen wird und somit keine zusätzliche Trennung erforderlich ist.

Gegenüber gröberen Körnungen bis hin zu 140 mm, die in herkömmlichen Anlagen verwendet werden, hat die genannte Korngröße den Vorteil, dass die vollständige Kalzinierung der Körner wesentlich schneller erfolgt. Zudem ist die genannte Korngröße besser rieselfähig und kompaktierbar.

Der Kalkstein kann eine Korngröße ab mehr als 0 mm aufweisen, um geeignet verdichten zu können. Es kann also feiner, pulverförmiger Kalkstein oder aber ein Korngemisch von 0 bis 1, 0 bis 2 oder 0 bis 7 mm verwendet werden.

Ein energetisch günstiger Wärmetausch zwischen der Vorwärmzone und der Kühlzone ist durch ein direktes Durchströmen von heißer Luft aus der Kühlzone durch die Vorwärmzone hindurch zwar möglich. Dafür ist aber ein apparatetechnisch hoher Aufwand erforderlich. Zu bevorzugen ist daher ein Wärmetausch, der über Wärmetauscher erfolgt.

In einer Ausführungsform beträgt eine Verweilzeit in der Vorwärmzone wenigstens 2 min oder wenigstens 5 min, oder wenigstens 60 min und/oder höchstens 200 min, insbesondere höchstens 150 min oder bevorzugt höchstens 120 min. In einer Ausführungsform beträgt eine Verweilzeit in der Brennzone wenigstens 2 min, insbesondere wenigstens 5 min und bevorzugt wenigstens 15 min und/oder höchstens 60 min, insbesondere höchstens 45 min und bevorzugt höchstens 30 min. In einer Ausführungsform beträgt eine Verweilzeit in der Kühlzone wenigstens 1 min, insbesondere wenigstens 3 min und bevorzugt wenigstens 5 min oder 15 min und/oder höchstens 60 min, insbesondere höchstens 45 min und bevorzugt höchstens 30 min. Auf diese Weise werden die benötigten Volumina der jeweiligen Zonen klein gehalten, um den technischen Aufwand und die Kosten zu reduzieren. Insbesondere im Vergleich zu herkömmlichen Brennöfen, die zwischen 12 h und 24 h für die drei Schritte benötigen. Gleichzeitig wird eine vollständige Kalzinierung ermöglicht.

In einer Ausführungsform werden pro Tag zwischen 25 t und 400 t, insbesondere zwischen 50 t und 250 t Branntkalk hergestellt.

Das in der Brennzone erzeugte CO₂ kann gelagert oder zu einem anderen Stoff weiterverarbeitet werden. Wird CO₂ zu einem anderen Stoff weiterverarbeitet, so dient das CO₂ als Rohstoff. Aus dem CO₂ kann beispielsweise Harnstoff, Methanol, zyklische Carbonate oder Salicylsäure hergestellt und so weiterverarbeitet werden.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Um einen energetisch besonders günstigen Wärmetausch zwischen der Vorwärmzone und der Kühlzone zu realisieren, grenzt die Vorwärmzone an die Kühlzone an. Vorwärmzone und Kühlzone können nebeneinander angeordnet sein. Vorwärmzone und Kühlzone können übereinander angeordnet sein. Die Vorwärmzone kann oberhalb der Kühlzone angeordnet sein. Die Brennzone kann dann neben der Vorwärmzone und der Kühlzone angeordnet sein. Um einen energetisch besonders günstigen Wärmetausch zwischen der Vorwärmzone und der Kühlzone zu realisieren, kann die Vorwärmzone innerhalb der Kühlzone angeordnet sein. Um einen energetisch besonders günstigen Wärmetausch zwischen der Vorwärmzone und der Kühlzone zu realisieren, kann die Kühlzone innerhalb der Vorwärmzone angeordnet sein. Der Wärmeaustausch zwischen der Vorwärmzone und der Kühlzone kann mittels horizontaler oder vertikaler Wärmerohre (Heat pipes) oder Wärmetauschereinrichtungen erfolgen.

Es zeigen:
- Figur 1:: eine schematische Darstellung einer erfindungsgemäßen Vorrichtung,
- Figur 2:: eine Ausführungsform einer erfindungsgemäßen Vorrichtung,
- Figur 3:: eine weitere Ausführungsform einer erfindungsgemäßen Vorrichtung,
- Figur 4:: Schleuse mit Kolben in Ausgangsstellung,
- Figur 5:: Schleuse mit Kolben in Endstellung,
- Figur 6:: weitere Ausführungsform einer Schleuse,
- Figur 7:: eine schematische Darstellung einer weiteren erfindungsgemäßen Vorrichtung,
- Figur 8:: eine schematische Darstellung einer weiteren erfindungsgemäßen Vorrichtung,
- Figur 9:: eine schematische Darstellung einer weiteren erfindungsgemäßen Vorrichtung.

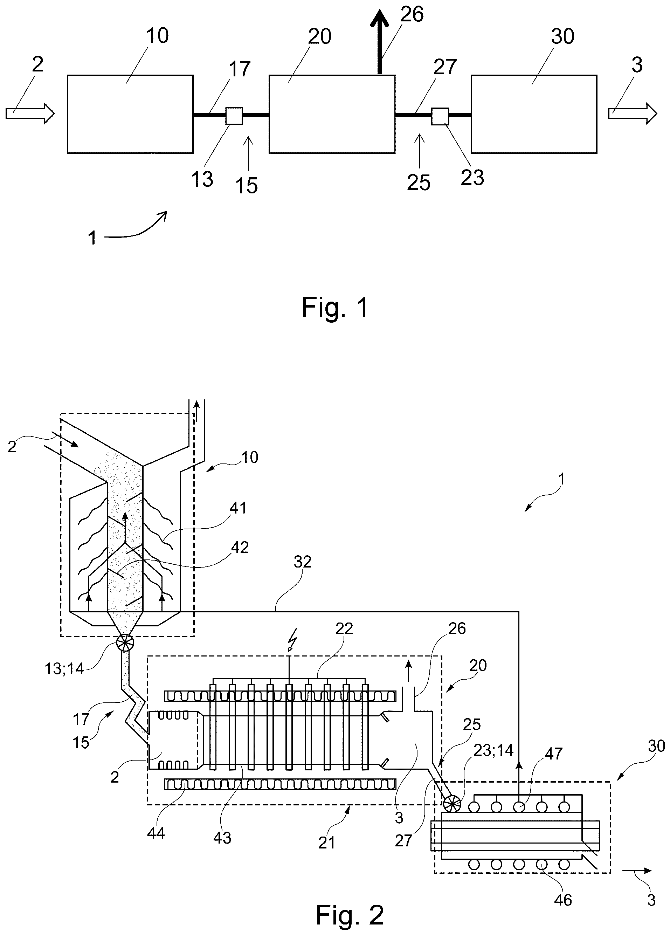

Figur 1 zeigt schematisch einen möglichen Aufbau einer erfindungsgemäßen Vorrichtung 1 zum Brennen von Kalkstein 2. Die Vorrichtung 1 umfasst eine Vorwärmzone 10, eine Brennzone 20 und eine Kühlzone 30. Kalkstein 2 wird in die Vorwärmzone gegeben und dort vorgewärmt, beispielsweise auf eine Temperatur zwischen 500°C und 600°C, so dass noch keine Umwandlung des Kalksteins in Branntkalk und folglich auch noch keine CO₂-Freisetzung erfolgen. Nach Durchlaufen der Vorwärmzone 10 wird der vorgewärmte Kalkstein 2 über die erste Leitung 17 weiter in die Brennzone 20 geleitet, wo er bei höheren Temperaturen gebrannt wird. CO₂ wird mittels einer CO₂-Abführeinrichtung 26, die als Rohrleitung ausgeführt ist und direkt an der Brennzone 20 angeordnet ist, abgeführt. Die Heizeinrichtungen sind in der schematischen Skizze der Figur 1 nicht dargestellt. Anschließend wird der erzeugte Branntkalk 3 über die zweite Leitung 27 weiter in die Kühlzone 30 geleitet, um auf eine Temperatur von beispielsweise unter 100°C abgekühlt zu werden. Aus der Kühlzone 3 kann der abgekühlte Branntkalk entnommen werden. Dazu umfasst die Kühlzone insbesondere eine Entnahmeeinrichtung, die beispielsweise als geeignete Rohrleitung ausgeführt sein kann.

Die Vorrichtung 1 umfasst eine Zuführung 15 für den Kalkstein 2 und eine Abführung 25 für den Branntkalk 3. Diese können grundsätzlich an beliebigen Positionen angeordnet sein. In der hier gezeigten Ausführungsform ist die Zuführung 15 dazu eingerichtet, den vorgewärmtem Kalkstein 2 in die Brennzone 20 zu leiten, und die Abführung 25 ist dazu eingerichtet, den heißen Branntkalk 3 aus der Brennzone 20 abzuleiten. Sowohl die Zuführung 15 als auch die Abführung 25 ist gastechnisch abgeschlossen, sodass die Atmosphäre der Brennzone 20 von den Atmosphären der anderen Zonen 10, 30 gastechnisch getrennt ist. Auf diese Weise wird das CO₂ konzentriert an dem Ort gesammelt, an dem es anfällt, und kann in hoher Reinheit abgeführt werden.

Der gastechnische Abschluss ist dadurch realisiert, dass in der ersten Leitung 17 eine Zuführschleuse 13 angeordnet ist und in der zweiten Leitung 27 eine Abfuhrschleuse 23 angeordnet ist. Die Schleusen 13, 23 ermöglichen den Durchlass bzw. Transport des jeweiligen festen Materials ohne einen nennenswerten Gasaustausch.

Zusätzlich zu den in Figur 1 gezeigten Leitungen kann das abgeführte CO₂ zur Vorwärmzone 10 geleitet werden, um dort mit einem Wärmetauscher seine Wärme an den vorzuwärmenden Kalkstein 2 abzugeben. Dabei sollte keine Vermischung des CO₂ mit der Atmosphäre der Vorwärmzone 10 stattfinden.

Zusätzlich kann ferner heißes Gas aus der Kühlzone 30 zur Vorwärmzone 10 geleitet werden, um dort seine Wärme an den vorzuwärmenden Kalkstein 2 abzugeben. Dies kann ebenfalls mit einem Wärmetauscher erfolgen oder über ein direktes Einblasen des heißen Gases in die Vorwärmzone 10. Typischerweise wird vergleichsweise kaltes Gas, beispielsweise Raumtemperatur aufweisende Luft, verwendet, um den heißen Branntkalk 3 in der Kühlzone 30 zu kühlen. Dabei wird das Gas erhitzt und kann anschließend wie beschrieben in der Vorwärmzone 10 Wärme abgeben. Diese Maßnahmen sorgen für einen besonders energieeffizienten Betrieb.

Figur 2 zeigt eine Vorrichtung 1, bei der ähnlich wie in Figur 1 die Vorwärmzone 10, die Brennzone 20 und die Kühlzone 30 separat ausgeführt und voneinander gastechnisch getrennt sind. Im hier gezeigten Ausführungsbeispiel sind alle drei Zonen 10, 20, 30 in separaten Aggregaten der Vorrichtung 1 untergebracht und mittels Rohrleitungen, die die erste Leitung 17 und die zweite Leitung 27 darstellen, miteinander verbunden.

Die Vorwärmzone 10 ist als vertikale Erwärmungseinrichtung ausgestaltet, wobei der vorzuwärmende Kalkstein 2 mit einer Korngröße zwischen 2 mm und 5 mm oben zugeführt wird, bei der Abwärtsbewegung erhitzt wird und unten vorgewärmt in die erste Leitung 17 geleitet wird. Im Inneren der Vorwärmzone 10 befindet sich eine Wendelrutsche 42 oder eine andere Einrichtung, um den Kalkstein 2 labyrinthartig durch die Vorwärmzone 10 zu führen.

Die Erwärmungseinrichtung hat einen Anschluss für eine Heißgasleitung 32, mit der heißes Gas aus der Kühlzone 30 in die Vorwärmzone geführt wird. Die Erwärmungseinrichtung umfasst Wärmeleitbleche 41, mit denen die Wärme des heißen Gases an den zu erwärmenden Kalkstein 2 abgegeben wird. Die Wärmeleitbleche 41 fungieren dabei als Wärmetauscher, der je nach Ausgestaltung einen Kontakt des heißen Gases mit der Atmosphäre der Vorwärmzone wie dargestellt verhindert oder, alternativ, zulässt. In der Erwärmungseinrichtung wird das heiße Gas von unten nach oben geführt, bildet also mit dem Kalkstein 2 einen Gegenstrom aus. Das abgekühlte Gas wird oben abgegeben, was mit einem Pfeil dargestellt ist. Zudem kann die Vorwärmzone eine beispielsweise elektrische Heizeinrichtung aufweisen (nicht dargestellt), um dem Kalkstein 2 weitere Wärme zuzuführen. Alternativ oder ergänzend kann auch in diesem Ausführungsbeispiel das heiße CO₂ genutzt werden, um den Kalkstein weiter vorzuwärmen.

Analog zur Ausgestaltung aus Figur 1 bildet die erste Leitung 17 die Zuführung 15 aus und die zweite Leitung 27 bildet die Abführung 25 aus. In der ersten Leitung 17 ist als Zufuhrschleuse 13 eine Zellenradschleuse 14 angeordnet, mit der der vorgewärmte Kalkstein 2 unter Gasabschluss in die Brennzone 20 geleitet und gefördert bzw. dosiert werden kann. Die Brennzone 20 ist als Drehrohrofen 21 ausgeführt. Dieser umfasst ein Rohr 43, welches horizontal ausgerichtet und leicht geneigt ist, sodass bei Drehung des Rohrs 43 um seine Längsachse der Kalkstein nach rechts gefördert und möglichst homogen durchmischt wird. Der Drehrohrofen 21 umfasst ferner eine insbesondere wärmeisolierende Einhausung 44. Mittels einer hier beispielhaft indirekten elektrischen Heizeinrichtung 22, die das Rohr 43 von außen erhitzt, wird dem zu brennenden Kalkstein 2 Wärme zugeführt, beispielsweise bis zu einer Temperatur zwischen 900°C und 1000°C. Im hinteren Bereich des Drehrohrofens 21 ist als CO₂-Abführeinrichtung an der oberen Seite ein Stutzen angeordnet, über den CO₂ abgeführt werden kann.

Nach Austritt aus dem Drehrohrofen 21 wird der heiße Branntkalk 3 in die zweite Leitung 27 geführt. In dieser ist als Abfuhrschleuse 23 eine Zellenradschleuse 14 angeordnet, mit der der heiße Branntkalk 3 unter Gasabschluss in die Kühlzone 30 geleitet und gefördert bzw. dosiert werden kann. In der Kühlzone 30 befindet sich eine Einblaseinrichtung 46, mit der kalte Luft insbesondere von unten eingeblasen werden kann. Mit einer Ablufteinrichtung 47 wird die erhitzte Luft insbesondere nach oben abgeführt und über die Heißgasleitung 32 wie beschrieben zur Vorwärmzone geleitet.

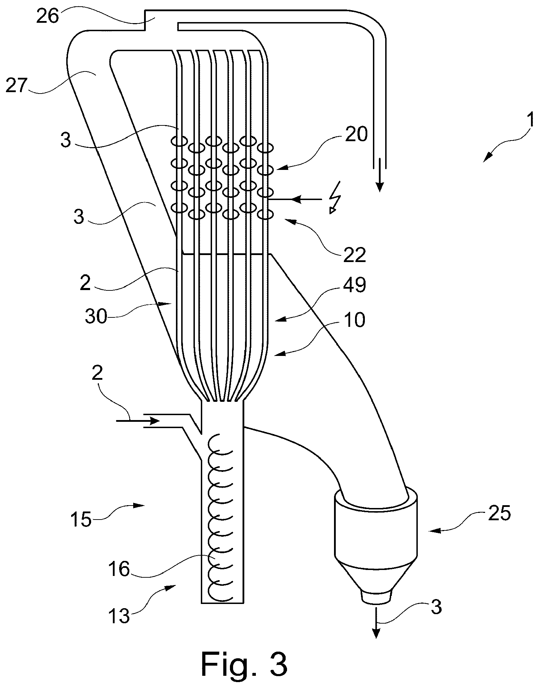

Figur 3 zeigt eine alternative Ausgestaltung, bei der die Vorwärmzone 10 und die Brennzone 20 unmittelbar nacheinander angeordnet sind und eine gemeinsame Atmosphäre aufweisen. Der zu brennende Kalkstein 2 wird auf der linken Seite zugegeben und über eine Leitung in die Zuführung 15 gegeben. Die Zuführung 15 dient hier beispielhaft dem Zuführen von Kalkstein 2 in die Vorwärmzone 10 und/oder in die Vorrichtung 10 sowie dem gastechnischen Abschluss. Die Zuführung 15 ist als Feststoffpumpe 16 ausgeführt und dient gleichermaßen als Zufuhrschleuse 13. Auf diese Weise kann Kalkstein 2 zugeführt werden, ohne dass ein relevanter Gasaustausch der Umgebung mit der Atmosphäre erfolgt, die im Inneren der Vorwärmzone 10 oder Brennzone 20 herrscht.

In der hier gezeigten Ausgestaltung wird der Kalkstein 2, der beispielsweise Außentemperatur aufweisen kann, direkt zugeführt und die Vorwärmung erfolgt vollständig in der gezeigten Vorwärmzone 10. Dann ist typischerweise keine erste Leitung zwischen der Vorwärmzone 10 und der Brennzone 20 vorhanden, da die genannten Zonen 10, 20 unmittelbar aneinander anschließen. In einer alternativen Ausgestaltung wird der dem gezeigten Teil der Vorrichtung zuzuführende Kalkstein 2 zusätzlich in einer vorgeschalteten Vorwärmzone vorgewärmt. In diesem Fall entspricht die oben genannte Leitung zur Zuführung 15 der ersten Leitung 17. Die oben genannte und als Rohrbündel dargestellte Vorwärmzone 10 wäre dann lediglich ergänzend für eine zusätzliche Vorwärmung vorhanden.

Oberhalb der Feststoffpumpe 16 teilt sich das Rohr in ein Rohrbündel mit einer Vielzahl dünnerer Rohre auf, durch die die Kalksteinpartikel weiter nach oben transportiert werden. Das Rohrbündel dient als Wärmetauscher 49 und stellt eine große Oberfläche bereit, um die Wärme des Branntkalks 3, der außerhalb der Rohre des Rohrbündels diagonal nach unten transportiert wird, auf den zu brennenden Kalkstein 2 zu übertragen. Dies entspricht in der gezeigten Ausführungsbeispiel der Vorwärmzone 10.

Reicht die Wärme des Branntkalks 3 für die Vorwärmung nicht aus, kann in jeder der oben beschriebenen Ausgestaltungen eine zusätzliche Erwärmung vorgesehen werden und/oder es kann ein Teil der dargestellten Heizeinrichtung 22 auch zur Vorwärmung genutzt werden.

Oberhalb des Wärmetauschers 49 ist eine Heizeinrichtung 22 angeordnet, die hier beispielhaft als elektrische Heizeinrichtung 22 dargestellt ist. Diese dient dazu, den vorgewärmten Kalkstein 2 weiter zu erwärmen, bis die für das Brennen notwendige Temperatur erreicht wird. Durch die große Oberfläche der unverändert als Rohrbündel vorliegenden Rohre für den zu erwärmenden Kalkstein 2 erfolgt die Erwärmung rasch und effizient. Im oberen Bereich des Rohrbündels und/oder im darüber befindlichen Bereich, in dem die Rohre wieder vereinigt sind, findet das Brennen statt. Diese Stelle dient also als Brennzone 20. Freigesetztes CO₂ wird direkt über eine oben angeordnete CO₂-Abführeinrichtung 26 mit anschließender Rohrleitung abgeführt.

Der entstandene Branntkalk 3 wird nach oben links und von dort nach unten rechts geführt, wobei er den oben beschriebenen, als Rohrbündel ausgeführten Wärmetauscher 49 außen umströmt und seine Wärme zumindest teilweise abgibt. In der hier gezeigten Ausführungsform dient dieser Bereich der Vorrichtung als Kühlzone 30, in der der Branntkalk 3 abgekühlt wird. In diesem Fall dient die oben links befindliche, gebogene Leitung als zweite Leitung 27 zwischen der Brennzone 20 und der Kühlzone 30.

In einer alternativen Ausführungsform ist an den Wärmetauscher 49 oder an den unten rechts dargestellten Auslass anschließend eine zusätzliche Kühlzone angeschlossen. In diesem Fall dient der Wärmetauscher 49 für den Branntkalk 3 lediglich als vorgeschaltete zusätzliche Kühlung. Reicht die Abkühlung nicht aus, kann in jeder der beiden Ausführungsformen eine zusätzliche Kühlung vorgesehen werden.

Der teilweise oder vollständig abgekühlte Branntkalk 3 verlässt die Kühlzone 30 und/oder die Vorrichtung 1 über die Abführung 25. Die Abführung 25 kann zusätzlich zum hier Gezeigten gastechnisch abgeschlossen ausgeführt sein. Beispielsweise kann eine Abfuhrschleuse angeordnet sein, um ein Eindringen von Gas und/oder ein Ausströmen von CO₂ zu verhindern.

Das separierte CO₂ weist in jedem der beschriebenen Fälle eine hohe Reinheit auf und kann demzufolge effizient weiterverarbeitet und beispielsweise als Rohstoff für die Industrie genutzt werden.

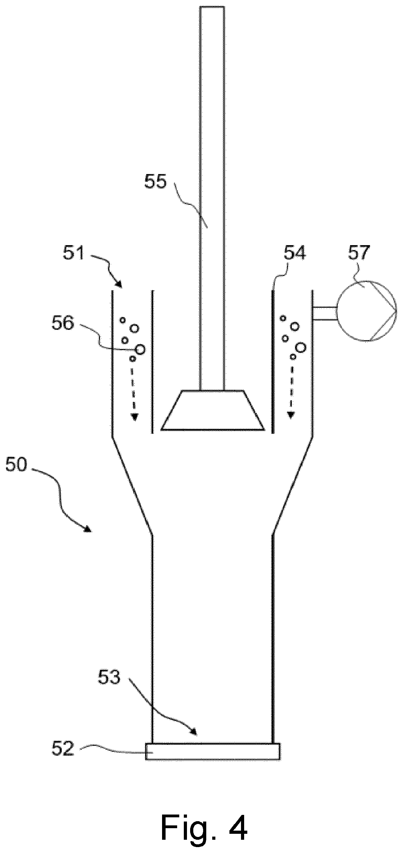

Die Figur 4 zeigt eine Schleuse 50. Die Schleuse 50 kann sich senkrecht erstrecken und kann schachtförmig sein. An der Oberseite kann sich ein Schleuseneingang 51 befinden. An der Unterseite der Schleuse 50 kann sich ein Verschluss 52 befinden, der den dann an der Unterseite befindlichen Schleusenausgang 53 verschließen kann. Gezeigt wird die geschlossene Stellung. Der Schleuseneingang 51 kann ringförmig um eine Führung 54 für einen Kolben 55 angeordnet sein. In der Figur 4 befindet sich der Kolben 55 in seiner Ausgangsstellung. Befindet sich der Kolben 53 der Schleuse 50 in seiner Ausgangsstellung, so kann Material 56 über den Schleuseneingang 51 in die Schleuse 50 hineinfallen, wie dies durch gestrichelte Pfeile angedeutet wird.

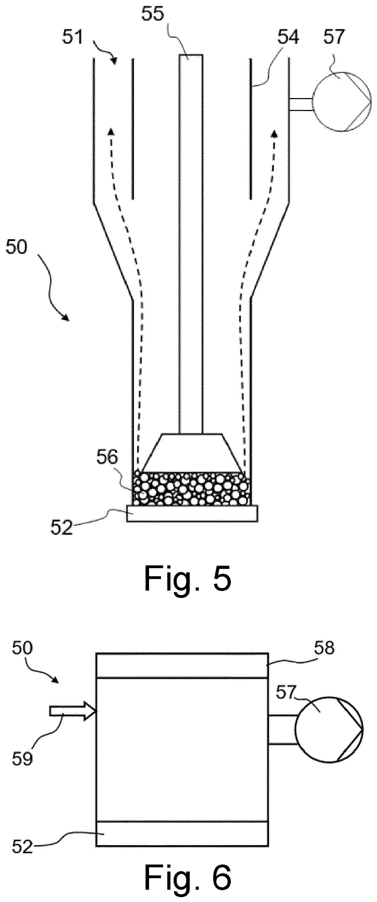

Ist in die Schleuse 50 eine gewünschte Menge an Material 56 hineingebracht worden, so kann das Material 56 durch den Kolben 55 verdichtet werden, wie dies in der Figur 5 skizziert wird. Luft entweicht dann, wie durch gestrichelte Pfeile angedeutet, aus dem Material 56 um das untere Kolbenende herum durch einen Ringspalt hindurch und kann die Schleuse 50 durch den Schleuseneingang 51 hindurch verlassen.

Das in den Figuren 4 und 5 gezeigte Füllen mit Material und anschließendem Verdichten kann mehrfach wiederholt werden, bis die Schleuse 50 bis zu einem gewünschten Grad gefüllt ist. Im Anschluss daran kann der Schleuseneingang 51 verschlossen werden. Es kann dann Luft aus der Schleuse 50 mit Hilfe einer Pumpe 57 abgepumpt werden. Im Anschluss daran kann der Schleusenausgang geöffnet werden, damit verdichtetes Material 56 aus der Schleuse 50 herausfallen kann.

Die Figur 6 zeigt eine Schleuse 50. An der Oberseite der Schleuse 50 kann ein Schleuseneingang vorhanden sein, der mit einem Verschluss 58 zum Beispiel gasdicht verschlossen werden kann. An der Unterseite der Schleuse 50 kann sich ein Verschluss 52 befinden, der den dann an der Unterseite befindlichen Schleusenausgang verschließen kann. Gezeigt wird die geschlossene Stellung. Der Verschluss 58 des Schleuseneingangs kann geöffnet werden, um die Schleuse 50 mit Material zu füllen. Danach kann der Schleuseneingang durch seinen Verschluss 58 wieder geschlossen werden. Nach dem Verschließen kann dann beispielsweise durch eine Pumpe 57 Luft aus der Schleuse 50 herausgepumpt werden. Im Anschluss daran befindet sich in der Schleuse 50 praktisch nur noch Material. Es kann nun der Verschluss 52 des Schleusenausgangs geöffnet werden. Material kann dann aus der Schleuse 50 herausfallen.

Die Schleuse 50 kann eine Flüssigkeitszufuhr 59 umfassen, über die eine Flüssigkeit in die Schleuse 50 gelangen kann. Flüssigkeit kann in die Schleuse 50 eingeleitet werden, nachdem die Schleuse 50 mit Material gefüllt worden ist. Ein Hinzufügen von Flüssigkeit kann sich günstig das gastechnische Abschließen auswirken. Ist die Flüssigkeit Wasser, so kann sich dies günstig auf die Umwandlung des Materials in der Brennzone auswirken.

Ist der Schleusenausgang einer Schleuse 50 mit der Vorwärmzone verbunden, dann fällt das Material in die Vorwärmzone hinein. Ist der Schleusenausgang einer Schleuse 50 mit der Brennzone verbunden, dann fällt das Material in die Brennzone hinein. Ist der Schleusenausgang einer Schleuse 50 mit der Kühlzone verbunden, dann fällt das Material in die Kühlzone hinein. Ist der Schleuseneingang der Schleuse 50 mit der Kühlzone verbunden, dann fällt das Material aus der Kühlzone heraus.

Ein Raum, in dem Kalkstein gebrannt wird, kann wie die zuvor anhand von Figur 6 beschriebene Schleuse 50 ausgestaltet sein, also ein Raum, in den Kalkstein eingefüllt werden kann, aus dem Branntkalk entfernt werden kann und aus dem Luft abgesaugt werden kann. Es kann dann sogar nur ein Verschluss 58 genügen, der sich beispielsweise an der Oberseite befinden kann. Ein Raum mit nur einem Verschluss 58 ist aber eher unpraktisch.

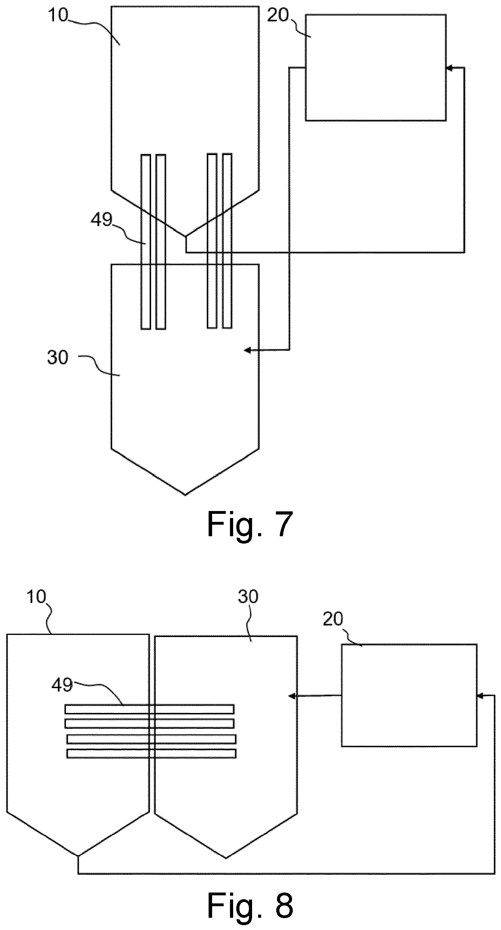

Die Figur 7 skizziert eine Anordnung der Vorwärmzone 10 oberhalb der Kühlzone 30. Die Vorwärmzone 10 grenzt an die Kühlzone 30 an. Die Brennzone 20 ist beispielsweise daneben angeordnet. Über Wärmetauscher 49 kann ein energetisch besonders günstiger Wärmetausch zwischen der Vorwärmzone 10 und der benachbarten Kühlzone 30 stattfinden. Die Brennzone 20 kann aber auch oberhalb oder unterhalb angeordnet sein.

Die Figur 8 skizziert eine Anordnung der Vorwärmzone 10 neben der Kühlzone 30. Die Vorwärmzone 10 grenzt an die Kühlzone 30 an. Die Brennzone 20 ist beispielsweise seitlich daneben angeordnet. Über Wärmetauscher 49 kann ein energetisch besonders günstiger Wärmetausch zwischen der Vorwärmzone 10 und der benachbarten Kühlzone 30 stattfinden.

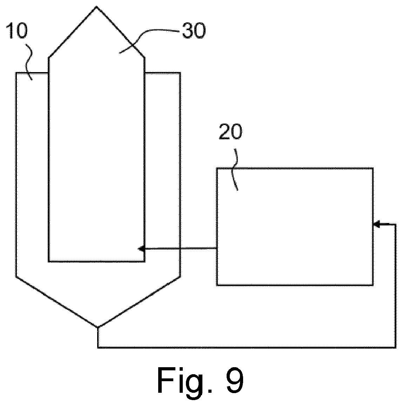

Die Figur 9 skizziert eine Anordnung der Kühlzone 30 innerhalb der Vorwärmzone 10. Die Brennzone 20 ist beispielsweise seitlich daneben angeordnet. Wärmetauscher sind dann nicht zwingend erforderlich, damit ein energetisch besonders günstiger Wärmetausch zwischen der Vorwärmzone 10 und der benachbarten Kühlzone 30 stattfinden kann. Es ist energetisch günstig, dass das Material innerhalb der Vorwärmzone 10 entgegengesetzt zum Material innerhalb der Kühlzone 30 transportiert wird.

Die Vorrichtung und das Verfahren sind in der Lage, hoch konzentriertes CO₂ zu erzeugen. Deshalb können die Vorrichtung und/oder das Verfahren auch als Vorrichtung bzw. Verfahren zur Erzeugung von hoch konzentriertem CO₂ bezeichnet werden. Die Brennzone 20, in der Prozess-CO₂ entsteht, kann demnach als CO₂-Entstehungszone bezeichnet werden.

In einer Ausführungsform weist die Vorrichtung eine Heizeinrichtung zum Erhitzen des vorgewärmten Kalksteins in der Brennzone auf, wobei die Heizeinrichtung eine indirekte Heizeinrichtung, eine elektrische Heizeinrichtung und/oder eine Verbrennungseinrichtung mit einer Zufuhr für einen Brennstoff sowie einer Zufuhr für reinen Sauerstoff umfasst. Mit anderen Worten können zwei beliebige der drei Arten von Heizeinrichtungen oder alle drei Arten von direkten oder indirekten Heizeinrichtungen kombiniert werden. Beispielsweise kann eine indirekte Erhitzung von außen mit einer direkten Verbrennung, insbesondere mit einem von Luft verschiedenen Oxidationsmittel wie beispielsweise Sauerstoff kombiniert werden. Auf diese Weise kann eine energetische Effizienzsteigerung erzielt werden.

In einer Ausführungsform sind Vorwärmzone, Brennzone, und Kühlzone voneinander gastechnisch im Wesentlichen getrennt. Dadurch kann hochkonzentriertes CO₂ aus der Brennzone abgeführt werden, ohne durch die Atmosphäre der Vorwärmzone oder der Kühlzone verunreinigt oder verdünnt zu werden. In einer Ausführungsform wird Wärme aus der Kühlzone verwendet, um die Vorwärmzone zu erhitzen. Dem Branntkalk wird Hitze entzogen und zum Vorwärmen des Kalksteins verwendet. Durch die gastechnische Trennung wird dabei die Temperatur in der Brennzone nicht beeinflusst. Dies macht die Verwendung teurer Inert- bzw. Edelgase zum Kühlen der Kühlzone überflüssig. Eine verfahrenstechnisch komplizierte Kreislaufführung mit Wärmetauschern kann entfallen.

Das Erhitzen in einer gastechnisch gegenüber der Vorwärmzone und der Kühlzone abgeschlossenen Brennzone in Kombination von direkten und indirekten Wärmeübertragungen bietet dabei das Potential der Energieeffizienzsteigerung sowie das Minimieren zu hoher Flammentemperaturen und dem dadurch sich ergebenden Risiko einer Versinterung des Produktes und/oder Überhitzungsschäden.

Dies ist insbesondere der Fall, wenn die Verbrennung direkt in der Brennzone erfolgt und/oder wenn zudem elektrisch geheizt wird. Wird als Oxidationsmittel reiner Sauerstoff verwendet, wird das anfallende CO₂ hierbei nicht durch andere Verbrennungsprodukte oder Inhaltsstoffe verunreinigt. So kann besonders hoch konzentriertes CO₂ erzeugt werden.

Ist die Vorwärmzone gegenüber der Brennzone gastechnisch abgeschlossen, wird das entstehende CO₂ zudem nicht durch Inhaltsstoffe des Kalksteins oder beim Vorwärmen entstehende Stoffe wie z. B. Asche, Schwefel, NOₓ oder Wasser(dampf) verunreinigt. Diese Stoffe können zudem in der Vorwärmzone entfernt werden und landen nicht im entstehenden Branntkalk. Damit wird die Qualität des Branntkalks erhöht.

### Bezugszeichenliste

| | |
|---|---|
| Vorrichtung | 1 |
| Kalkstein | 2 |
| Branntkalk | 3 |
| Vorwärmzone | 10 |
| Zufuhrschleuse | 13 |
| Zellenradschleuse | 14 |
| Zuführung | 15 |
| Feststoffpumpe | 16 |
| Erste Leitung | 17 |
| Brennzone | 20 |
| Drehrohrofen | 21 |
| Heizeinrichtung | 22 |
| Abfuhrschleuse | 23 |
| Abführung | 25 |
| CO₂-Abführeinrichtung | 26 |
| Zweite Leitung | 27 |
| Kühlzone | 30 |
| Heißgasleitung | 32 |
| Wärmeleitbleche | 41 |
| Wendelrutsche | 42 |
| Rohr | 43 |
| Einhausung | 44 |
| Einblaseinrichtung | 46 |
| Ablufteinrichtung | 47 |
| Wärmetauscher | 49 |
| Schleuse | 50 |
| Schleuseneingang | 51 |
| Schleusenausgang-Verschluss | 52 |
| Schleusenausgang | 53 |
| Kolbenführung | 54 |
| Kolben | 55 |
| Material | 56 |
| Pumpe | 57 |
| Schleuseneingang-Verschluss | 58 |
| Flüssigkeitszufuhr | 59 |

## Patentansprüche

1. Vorrichtung (1) zum Brennen von Kalkstein (2), umfassend eine Vorwärmzone (10) zum Vorwärmen von Kalkstein (2), eine Brennzone (20) zum Brennen des vorgewärmten Kalksteins (2) zwecks Herstellung von Branntkalk (3) und eine Kühlzone (30) zum Abkühlen des Branntkalks (3), wobei die Vorrichtung (1) eine Zuführung (15) für Kalkstein (2) und eine Abführung (25) für Branntkalk (3) aufweist, wobei die Zuführung (15) und/oder die Abführung (25) gastechnisch im Wesentlichen abgeschlossen sind.

2. Vorrichtung (1) nach dem vorhergehenden Anspruch, **dadurch gekennzeichnet, dass** die Zuführung (15) zum Zuführen von vorgewärmtem Kalkstein (2) in die Brennzone (20) dient und/oder dass die Abführung (25) zum Abführen von heißem Branntkalk (3) aus der Brennzone (20) dient.

3. Vorrichtung (1) nach einem der vorhergehenden Ansprüche, **dadurch gekennzeichnet, dass** die Vorrichtung (1) einen Drehrohrofen (21) aufweist, welcher die Brennzone (20) ausbildet.

4. Vorrichtung (1) nach einem der vorhergehenden Ansprüche, **dadurch gekennzeichnet, dass** die Vorrichtung (1) eine CO₂-Abführeinrichtung (26) zum Abführen von in der Brennzone (20) freigesetztem CO₂ aufweist.

5. Vorrichtung (1) nach einem der vorhergehenden Ansprüche, **dadurch gekennzeichnet, dass** die Zuführung (15) eine Zufuhrschleuse (13) aufweist, um den Kalkstein (2) in die Vorrichtung (1), insbesondere in die Brennzone (20), zu fördern und/oder dass die Abführung (25) eine Abfuhrschleuse (23) aufweist, um den Branntkalk (3) aus der Vorrichtung (1) heraus, insbesondere aus der Brennzone (20) heraus, zu fördern,
wobei die Zufuhrschleuse (13) und/oder die Abfuhrschleuse (23) insbesondere als Zellenradschleuse (14), Förderschnecke oder Feststoffpumpe (16) ausgestaltet ist.

6. Vorrichtung (1) nach einem der beiden vorhergehenden Ansprüche, **dadurch gekennzeichnet, dass** zumindest eine der Schleusen (13, 23, 50) eine Pumpe (57) für ein Abpumpen von Luft aus der Schleuse (50) umfasst.

7. Vorrichtung (1) nach einem der drei vorhergehenden Ansprüche, **dadurch gekennzeichnet, dass** zumindest eine der Schleusen (13, 23, 50) Verschlüsse (52, 58) für ein gasdichtes Verschließen umfasst und/oder dass zumindest eine der Schleusen (13, 23, 50) eine Zufuhr (59) für Flüssigkeit umfasst.

8. Vorrichtung (1) nach einem der vorhergehenden Ansprüche, **dadurch gekennzeichnet, dass** die Vorrichtung (1) eine Heizeinrichtung (22) zum Erhitzen des vorgewärmten Kalksteins (2) in der Brennzone (20) aufweist, wobei die Heizeinrichtung (22) eine indirekte Heizeinrichtung (22) ist, eine elektrische Heizeinrichtung (22) ist, oder eine Verbrennungseinrichtung mit einer Zufuhr für einen Brennstoff sowie einer Zufuhr für reinen Sauerstoff ist.

9. Vorrichtung (1) nach einem der vorhergehenden Ansprüche, **dadurch gekennzeichnet, dass** die Vorrichtung (1) eine CO₂-Leitung aufweist, mit der heißes CO₂ aus der Brennzone (20) in die Vorwärmzone (10) geführt wird und/oder dass die Vorrichtung (1) eine Heißgasleitung (32) aufweist, mit der heißes Gas aus der Kühlzone (30) in die Vorwärmzone (10) geführt wird.

10. Vorrichtung (1) nach einem der vorhergehenden Ansprüche, **dadurch gekennzeichnet, dass** die Vorrichtung (1) eine erste Leitung (17) zwischen der Vorwärmzone (10) und der Brennzone (20) aufweist und/oder eine zweite Leitung (27) zwischen der Brennzone (20) und der Kühlzone (30) aufweist.

11. Vorrichtung (1) nach einem der vorhergehenden Ansprüche, **dadurch gekennzeichnet, dass** die Vorwärmzone (10) und die Kühlzone (30) unmittelbar benachbart angeordnet sind oder dass die Vorwärmzone (10) in der Kühlzone (30) angeordnet ist oder dass die Kühlzone (30) in der Vorwärmzone (10) angeordnet ist.

12. Verfahren zum Brennen von Kalkstein (2) in einer Vorrichtung (1) zum Brennen von Kalkstein (2), umfassend Vorwärmen von Kalkstein (2) in der Vorrichtung, Brennen des vorgewärmten Kalksteins (2) zum Herstellen von Branntkalk (3) in der Vorrichtung und Abkühlen des Branntkalks (3) in der Vorrichtung, **dadurch gekennzeichnet, dass** das Brennen des Kalksteins so unter Ausschluss von Luft erfolgt, dass durch das Brennen des Kalksteins CO₂ mit einem Reinheitsgrad von wenigstens 90% entsteht.

13. Verfahren zum Brennen von Kalkstein (2) nach dem vorgehenden Anspruch, **dadurch gekennzeichnet, dass** das Vorwärmen von Kalkstein (2) in einer Vorwärmzone (10) erfolgt, das Brennen des vorgewärmten Kalksteins (2) zum Herstellen von Branntkalk (3) in einer Brennzone (20) erfolgt und das Abkühlen des Branntkalks (3) in einer Kühlzone (30) erfolgt, wobei die Vorrichtung (1) eine Zuführung (15) für Kalkstein (2) und eine Abführung (25) für Branntkalk (3) aufweist, wobei die Zuführung (15) und/oder die Abführung (25) gastechnisch im Wesentlichen abgeschlossen sind.

14. Verfahren einem der zwei vorhergehenden Ansprüche, **dadurch gekennzeichnet, dass** beim Brennen freigesetztes CO₂ abgeführt und insbesondere aufgefangen wird.

15. Verfahren nach einem der drei vorhergehenden Ansprüche, **dadurch gekennzeichnet, dass** einer Heizeinrichtung (22) der Brennzone (20) reiner Sauerstoff sowie ein Brennstoff zugeführt werden, um den vorgewärmten Kalkstein (2) zu erhitzen.
